# EUROPEAN PATENT SPECIFICATION

(11) **EP 3 569 874 B1**
(45) Date of publication and mention of the grant of the patent: **04.05.2022**
(21) Application number: 18172225.7
(22) Date of filing: 15.05.2018
(51) Int. Cl.: F16B 12/20, A47B 96/02, F16M 11/04, F16M 11/08, F16M 11/22, A47B 57/54

(54) **STORAGE CAROUSEL**
LAGERKARUSSELL
CARROUSEL DE STOCKAGE

(43) Date of publication of application: 20.11.2019
(73) Proprietor: Pelly Components AB, 330 33 Hillerstorp (SE)
(72) Inventor: ZELENIUS, Vytautas, 48464 Kaunas (LT)
(74) Representative: Bergenstråhle & Partners AB

(56) References cited:
- AT-U1- 10 606
- DE-U1-202015 101 212
- US-A1- 2014 262 847

## Description

### Technical field

The invention discloses a storage carousel for storage of articles in a cabinet and connection means for connecting a shelf in a cabinet at the storage carousel. More particularly the disclosure relates to connecting means enabling a quick fixture of the shelf to a bottom or a guide arm of the storage carousel and also a quick release of the shelf.

### Background art

Cabinets, for example those used in kitchens, typically comprise a shelf, or a plurality of shelves provided for the storage of articles. Previously known storage carousels often have circular and rotatable shelves around a central post. Some varieties are half-circular or three quarters of a circle, with the post positioned as for a full circle. Utilizing the space of the shelf to maximum is essential for all different shapes of shelves. For solutions with a central post, the available space on the storage shelf is not used efficiently, since the central post occupies space. Conversely, if the whole shelf is accessible, then the storing of articles becomes more optimal. Further, in prior art solutions, the installing of the shelves into the cabinet on the post is often complicated as well as setting the height between several shelves in the cabinet. In prior art solutions, uninstalling of the shelf, i.e. taking out a shelf from the cabinet for cleaning etc., is rather complicated. Known solutions are more or less mounted into the cabinet in a non-releasable manner.

One known storage carousel is presented in the German document DE 20 2015 101 212 U1, which discloses a solution with half-circular shelves attached to a cabinet by a post connected to a sidewall of the cabinet. Further, it is possible to swing out the half-circular shelves from the cabinet and it is also possible to adjust the height of each shelf along the post. The solution lacks a central post but since the shelves are half-circular, the available storage space of each shelf is limited compared to a full circular shelf. Further, the shelves are not easy to mount or dismount in a quick and easy manner.

### Summary of the invention

It is an object of the invention to address at least some of the problems and issues outlined above. It is possible to achieve these objects and others by a storage carousel for a cabinet as defined in the attached independent claim. The invention discloses a storage carousel comprising quick connecting means. The invention further discloses a storage carousel solution which lacks a central post and further that the final setting of the height between the shelves when assembling the storage carousel is stepless and very quick and easy to manage. It is also easy to change height setting of a shelf after the assembly.

According to an aspect of the invention, a storage carousel for a cabinet is disclosed. The storage carousel comprises at least one shelf and at least one connecting means for pivotable connection of the shelf to the cabinet. The connecting means comprises first attachment means arranged for attachment either to the shelf or a cabinet, and second attachment means arranged for attachment to the one of the shelf or a cabinet to which the first attachment means is not connected. The storage carousel further comprises a pivotable part which is arranged at the first attachment means, and said pivotable part is pivotable relative the first attachment means. The pivotable part comprises first engagement means and the second attachments means comprises corresponding second engagement means, and the pivotable part is lockable relative to the second attachments means by engaging the first engagement means with the second engagement means, wherein the shelf in its locked position relative the pivotable part, is pivotable.

At such a storage carousel solution it is very easy and quick to assemble a shelf in the cabinet because of the inventive connecting means. It is very easy to install the shelf since the first attachment means is attached to the cabinet (indirectly or directly) and the second attachment means is arranged on the shelf, or vice versa. By inserting the shelf in the cabinet, placing the shelf with its attachment means on the corresponding attachment means in the cabinet and connect the engagement means to each other, the storage carousel is fitted with the shelf in a simple and user-friendly way. By that the shelf is locked to the pivotable part of the first attachment means via the second attachment means, the storage carousel discloses a shelf which is pivotally and safely fitted in the cabinet in a very easy and quick manner compared to prior art solutions.

Further, the pivotable part of the first attachment means is a disc and the first engagement means is at least one radially protruding tab arranged on a periphery of the disc. Preferably, the disc comprises three or four protruding tabs, but one is enough for engaging the first and second engaging means such as the disc is locked to the second attachment means. The disc is pivotable relative to the first attachment means, preferably by means of a ball-bearing arranged between the first attachment means and the pivotable disc. Making the pivotable part as a disc with protruding tabs is a production efficient solution which enables an easy solution of the engagement function between the first and second attachment means, wherein a shelf of the storage carousel is easy to connect and disconnect.

Further, the second attachment means has inner dimensions which substantially corresponds with outer dimensions of the disc, such as the disc fits inside the second attachment means. Further, the second attachment means comprises at least one recess arranged to receive the at least one radially protruding tab of the disc, and the second engagement means is at least one locking groove, which is arranged in connection to the at least one recess. For locking the disc relative to the second attachment means is each protruding tab insertable into the respective locking groove from the respective recess. Each locking groove has an opening towards the adjacent recess such as the protruding tab first may be inserted into the recess and then, by pivoting the pivotable part, the protruding tab enters the locking groove for engaging the first and the second engaging means. According to the invention, the second attachment means has the form of a circular ring, and the pivoting part the form of a circular disc.

According to an embodiment of the inventive storage carousel, the pivotable part comprises an actuation arm, which is fixedly arranged to the pivotable part. The actuation arm is arranged for actuating the locking/unlocking of the pivotable part relative to the second attachments means by a pivoting movement of the actuation arm, wherein the pivotable part engages/disengages the first engagement means with the second engagement means. The actuation arm provides an easy management for pivoting the pivoting part and further, the pivotable part and the engaging means may be arranged in a protective housing or the like, to protect the user from the moving and locking parts of the connecting means. Thus, a safe and easy maneuverable solution for engaging/disengaging a shelf at the storage carousel is disclosed.

According to an embodiment of the inventive storage carousel, the actuation arm protrudes radially from the pivotable part. The radially protruding actuation arm does not need to protrude exactly radially but may be adapted with a suitable angle relative the radial direction from the pivoting center of the pivoting part. The actuation arm may also be fixedly attached to the pivoting part at a distance from the pivoting center of the pivoting part. Such a solution enables an easy control of the locking of the pivotable part of the first attachment means to the second attachment means, and thus the shelf is locked in the cabinet in a safe manner but still the shelf is pivotable in the cabinet.

According to an embodiment of the inventive storage carousel, the actuation arm is lockable by a stop when the pivotable part of the first attachment means is locked relative to the second attachments means. This means that the arm is secured when the shelf is locked to the pivotable part, i.e. when the shelf is mounted in the cabinet in the using mode of the storage carousel. The stop is preferably arranged on an opposite part of where the first attachment means is arranged. For example, if the first attachment means is arranged in fixed connection to the cabinet, that is for example on a supporting arm or at the bottom of the cabinet, the stop is positioned on the underside of the shelf. And if the first attachment means is arranged in fixed connection to the shelf, the stop is positioned on for example the bottom of the cabinet or at the supporting arm which carries the shelf. By that the actuation arm is lockable by a stop, the shelf may not fall off from the fastened position, and the actuation arm is in this position out of way when rotating the shelf.

According to a not claimed embodiment, one first attachment means is arranged at an upper side of a bottom of the cabinet. By such an arrangement, one of several shelves may be fitted directly at the cabinet without any further vertical posts or the like, which is a cost-efficient solution compared to prior art. The connecting means and the assembly are exactly the same as described above.

According to an embodiment of the inventive storage carousel, the storage carousel further comprises a guide rail, which is fixedly arranged to the cabinet, near a side wall of the cabinet. The storage carousel also comprises and a supporting arm and at least one first attachment means is arranged at a first end of the supporting arm. And the supporting arm is slidingly arranged at the guide rail by that a second end of the supporting arm comprises a sleeve, which is slidably arranged at the guide rail, such as the sleeve can be displaced along the guide rail in a vertical direction in the cabinet. Such an arrangement provides an easy and quick final step when mounting/setting up the storage carousel in the cabinet where the final setting of the height between the shelves is completely stepless. It is also easy to change height a shelf, anytime during the using mode.

According to an embodiment of the inventive storage carousel, the sleeve is lockable to the guide rail by means of a friction lock. The friction lock is maneuvered with a locking handle between the unlocked (open) position and a locked (closed) position and provides the stepless locking of the sleeve to the guide rail, preferably by brake blocks or the like. This is a great advantage over prior art solutions, regarding easy handled mounting and setting of the height of the shelf in the cabinet.

Further possible features and benefits of this solution will become apparent from the detailed description below.

### Brief description of drawings

The solution will now be described in more detail by means of exemplary embodiments and with reference to the accompanying drawings, in which:
Fig. 1 is showing a perspective view of a corner cabinet comprising a storage carousel.
Fig. 2 is showing a perspective view of the storage carousel comprising two shelves for storing of articles in the cabinet.
Fig. 3 is a perspective view of a first attachment means of a connecting means for connecting a shelf to the cabinet, at the storage carousel.
Fig. 4 is a perspective view of a second attachment means of the connecting means for connecting a shelf to the cabinet.
Fig. 5 is a perspective view of an underside of a shelf, comprising the second part of the connecting means.
Fig. 6 is a perspective view of a supporting arm, comprising the first part of the connecting means and a sleeve.
Fig. 7a-b are perspective views of the connecting means at different stages during mounting the shelf by the connecting means. The views are oblique from above with the shelf semi-transparent, to be able to see the connecting means.
Fig. 8a-b are perspective views of an end of the supporting arm and the sleeve in an unlocked position and a locked position.
Fig. 9a-b shows the assembly of a lower shelf to the cabinet where the first attachment means of the connecting means is positioned directly on an upper side of the bottom of the cabinet.
Fig. 10a-c shows the assembly of an upper shelf to the cabinet where the first attachment means of the connecting means is positioned on the supporting arm, which in turn is slidingly attached to a guide rail which is fixedly attached to the cabinet.

### Detailed description

Briefly described, an inventive storage carousel comprising connecting means is provided. The invention is a cost-efficient solution which is easy to assemble for an end user or a craftsman, which enables rapid assemble of shelves to a cabinet in storage carousel solutions.

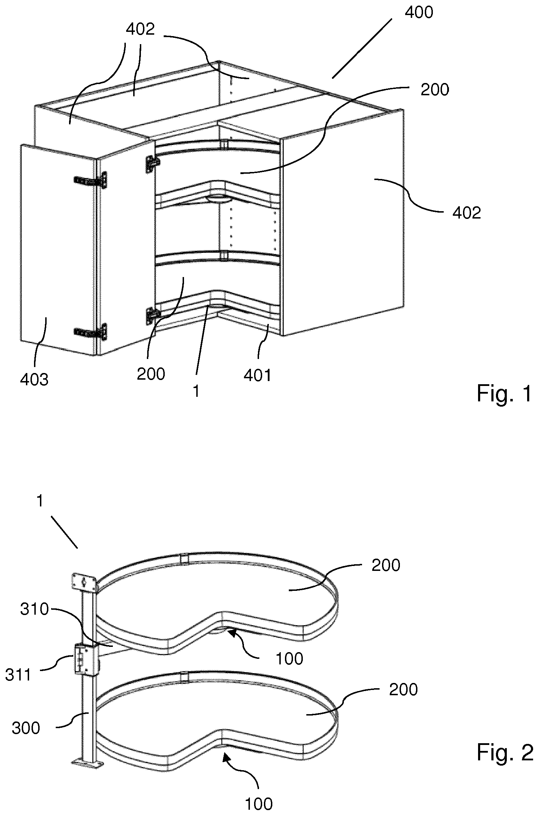

Fig. 1 shows a perspective view of a cabinet 400 comprising a storage carousel 1 with two pivotable shelves 200. The cabinet 400 is a so-called corner-cabinet 400 and comprises a bottom 401, four sidewalls 402 and a door 403. On top of the cabinet 400 is normally a work top positioned (not visible). The two pivotable shelves 200 have a three-quarter circular shape and they are pivotably attached to the storage carousel 1, which will be explained below. As can be seen in Fig. 1, the inventive storage carousel 1 lacks a central post, which means that a larger surface is available for storage.

Fig. 2 shows a perspective view of the storage carousel 1 where the lower of the two shelves 200 is to be mounted directly on the bottom 401 of the cabinet 400, by means of a connection means 100 according to the invention. The upper of the two shelves 200 is mounted at the end of a supporting arm 310, by means of the same type of connection means 100, attached to the supporting arm 310. The supporting arm 310 is slidingly arranged at a guiding rail 300 by means of a sleeve 311, which is fitted on the supporting arm 310, and which also is slidingly arranged at the guiding rail 300. Further, the guiding rail 300 is arranged to be fixedly attached to an inside of one of the sidewalls 402 of the cabinet 400, outside the periphery of the shelf 200. Thus, the lower shelf 200 is fixed in the vertical direction, while the upper shelf 200 is adjustable in the vertical direction. It is also possible to fit a third shelf 200 to the guide rail if wanted, or several more shelves 200.

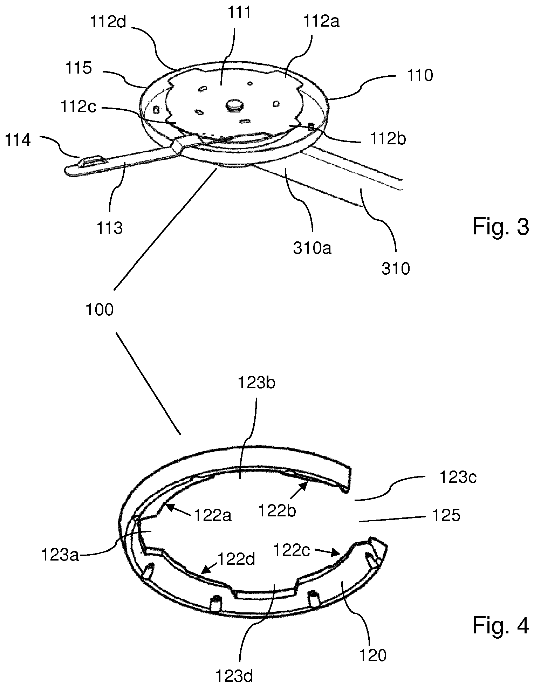

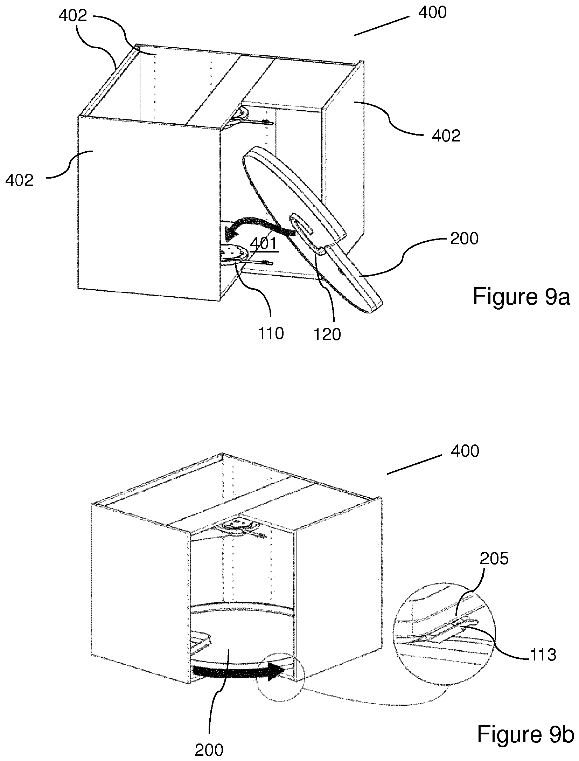

Fig. 3 shows a perspective view of a first attachment means 110 of the connecting means 100 for connecting the shelf 200 to the cabinet 400, at the storage carousel 1 according to the invention. In Fig. 3, the first attachment means 110 is fixedly mounted to a first end 310a of the supporting arm 310, but if the first attachment means 110 is to be mounted directly at an upper side of the bottom 401 of the cabinet (as in Fig. 9a), it is preferably screwed directly to the bottom 401. According to the invention, the first and the second attachment means 110, 120 may be arranged in the opposite way, such as instead the shelf 200 comprises the first attachment means 110 and the cabinet bottom 401 or the supporting arm 310 comprises the second attachment means 120. The first attachment means110 has the form of a circular plate with an outer rim 115 and carries a pivotable part 111 in the form of a circular disc 111. The circular disc 111 is pivotable relative to the first attachment means 110 by means of a ball-bearing (not visible). The pivotable disc 111 comprises first engagement means 112 in the form of four radially protruding tabs 112a, 112b, 112c, 112d arranged on a periphery of the disc 111. The pivotable disc 111 further comprises an actuation arm 113, which is fixedly arranged to the disc 111 such as it protrudes radially from the pivotable disc 111. The actuation arm 113 is arranged for actuating the locking/unlocking of the pivotable part 111 relative to the second attachments means 120 by pivoting the actuation arm 113, which will be explained further below.

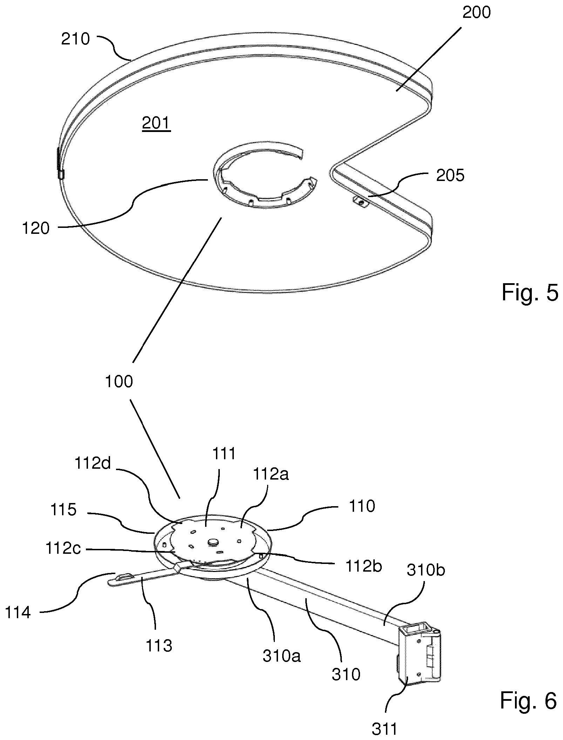

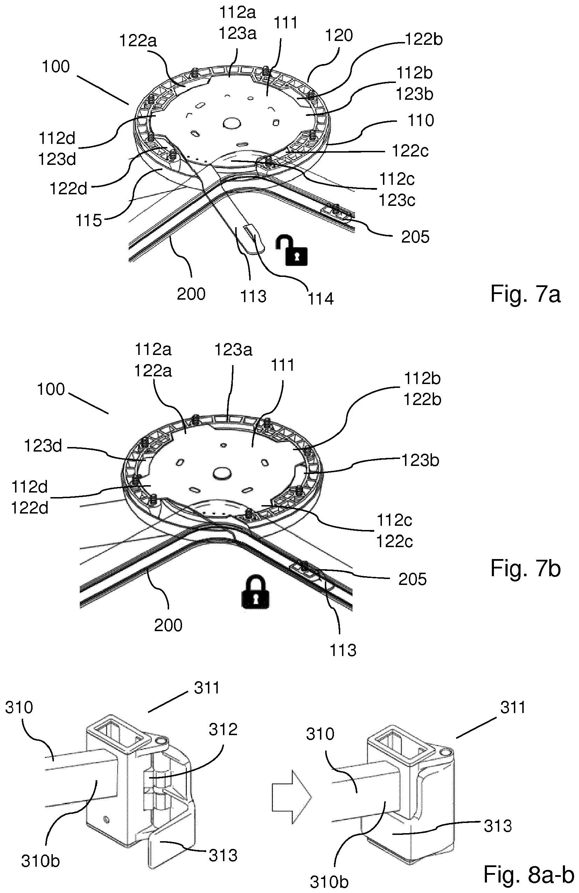

Fig. 4 shows a perspective view of a second attachment means 120 of the connecting means 100 for connecting the shelf 200 to the cabinet 400, at the storage carousel 1 according to the invention. The second attachment means 120 is designed as a circular ring with a gap section 125 and the second attachment means 120 is aimed to be fixedly attached on an underside 201 of the shelf 200, for example by screws (see Fig.5). Of course, the second attachment means 120 may be fitted on the bottom of the cabinet 400 or - if redesigned - on the supporting arm 310, if the first and the second attachment means 110, 120 are to be arranged in the opposite way. Even if it is not presented in the figures, it is a possible solution to shift the positioning of the first and the second attachment means 110, 120 such as the shelf 200 comprises the first attachment means 110 and the cabinet bottom 401 or the supporting arm 310 comprises the second attachment means 120. Inner dimensions of the second attachment means 120 (the ring), i.e. the inner diameter, substantially corresponds to outer dimensions/diameter of the disc 111, such as the disc 111 fits inside the ring/second attachment means 120. The second attachment means 120 further comprises four recesses 123a, 123b, 123c, 123d, which respective recess is arranged to receive one respective radially protruding tab 112a, 112b, 112c, 112d of the disc 111. Further, the second attachment means 120 comprises second engagement means 122 in the form of locking grooves 122a, 122b, 122c, 122d, which are arranged in connection to a respective one of the recesses 123a, 123b, 123c, 123d. Each locking groove 122a, 122b, 122c, 122d has an opening towards the adjacent recess 123a, 123b, 123c, 123d such as one protruding tab 112a, 112b, 112c, 112d of the disc 111 is insertable first into a recess 123a, 123b, 123c, 123d and then is insertable into the corresponding locking groove 122a, 122b, 122c, 122d from the respective recess 123a, 123b, 123c, 123d, when the actuation arm 113 is pivoted, for locking the disc 111 into the second attachment means 120, see further Fig. 7a-b.

Fig. 5 shows a perspective view of an underside 201 of the shelf 200, comprising the second attachment means 120 of the connecting means 100, which was presented in Fig. 4. A rim 210 attached to outer periphery of the shelf 200 is also visible in the figure. On the underside 201 of the shelf 200 is a stop 205 arranged, which facilitates a locking of the actuation arm 113 connected to the pivotable disc 111. This will be explained below.

Fig. 6 shows a perspective view of the first attachment means 110 presented in Fig. 3, when fixedly mounted to the first end 310a of the supporting arm 310. On a second end 310b of the supporting arm 310 is the sleeve 311 fixedly attach. The sleeve 311 will be further presented below in connection to Fig. 8a-b. As partly explained above in connection to Fig. 3 and Fig. 4, the first attachment means 110 and the second attachment means 120 are connected to form the complete connecting means 100 by fitting the second attachment means 120, i.e. the ring 120, outside the pivotable disc 111 and into the first attachment means 110, which will be further explained below.

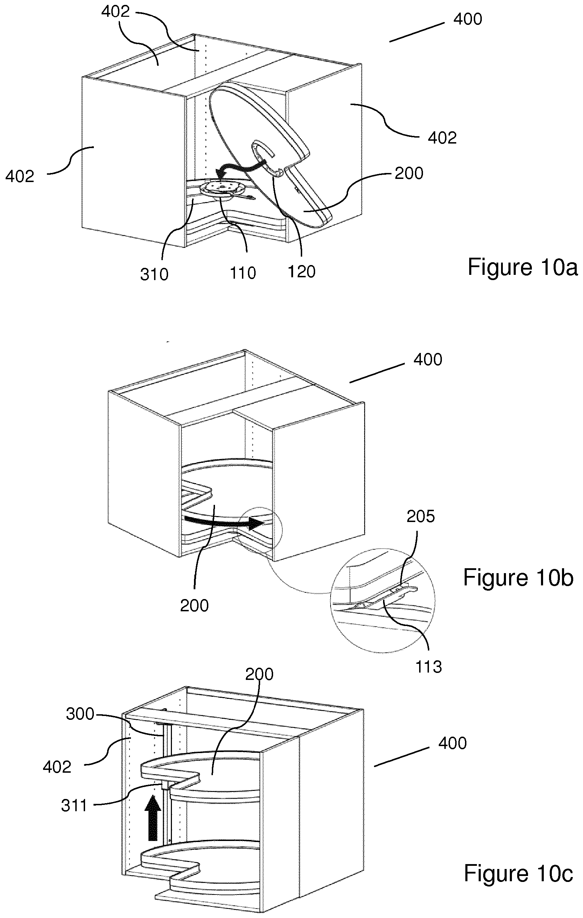

Fig. 7a-b shows perspective views of the connecting means 100 at different stages during mounting the shelf 200 to the cabinet by the connecting means 100. The views are oblique from above with the shelf 200 semi-transparent, to be able to see the connecting means 100. When mounting the shelf 200, the shelf with its ring 120 positioned on the underside of the shelf 200, is placed on top of the first attachment means 110 such as the protruding tabs 112a, 112b, 112c, 112d of the disc 111 enters the respective recesses 123a, 123b, 123c, 123d, see Fig. 7a. In this position, the connecting means is in an unlocked stage. The outer rim 115 of the first attachment means 110 encloses the second attachment means/the ring 120 when the first and second attachment means 110, 120 are joined as the connecting means 100. Thereafter, the pivotable disc 111 is pivoted by the actuation arm 113, such as the protruding tabs 112a, 112b, 112c, 112d of the disc 111 enters respective locking grooves 122a, 122b, 122c, 122d of the ring 120 from the respective recess 123a, 123b, 123c, 123d, wherein the pivotable disc 11 now is locked to the ring 120, see Fig. 7b. In the figure, this is performed by a pivoting movement of the actuation arm 113 to the right. To prevent an unwanted back-rotation of the actuation arm 113, the actuation arm 113 is locked behind the stop 205, positioned on the underside 201 of the shelf 200, see also Fig. 9 and 10. The actuation arm 113 may comprise a heel 114 arranged for locking against the stop 205.

Fig. 8a-b shows perspective views of the second end 310b of the supporting arm 310 comprising the sleeve 311, where the latter is in an unlocked position (8a) and a locked position (8b). The sleeve 311 is slidingly arranged to the guiding rail 300 (not visible) as shown in Fig. 2 and 10c. The sleeve 311 comprises a friction lock 312 which is maneuvered with a locking handle 313 between the unlocked position of Fig. 8a and the locked position of Fig. 8b. The friction lock 312 provides a stepless locking of the sleeve 311 to the guide rail 300, by brake blocks or the like. This is a great advantage over prior art solutions, regarding easy handled mounting and setting of the height of the shelf 200 in the cabinet 400.

Fig. 9a-b shows the assembly of the lower shelf 200 to the cabinet 400, where the first attachment means 110 of the connector 100 is positioned directly on an upper side of the bottom 401 of the cabinet 400. Of course, the cabinet 400 further comprises the rest of the storage carousel 1, such as guide rail 300, supporting arm 310 etc., but those parts are not visible in the figure. As explained above, the second attachment means 120 is fixedly attached to the underside 201 of the shelf 200, and the shelf 200 is inserted into the cabinet 400 and positioned as explained on the first attachment means 110, such as the protruding tabs 112a, 112b, 112c, 112d of the disc 111 enters the recesses 123a, 123b, 123c, 123d. Then, the shelf 200 is rotated to the right such as the shelf 200 is in position where the "open quarter" of the shelf 200 is in front of the opening of the cabinet 400, and in this position the actuation arm 113 is visible. When the actuation arm 113 then is pivoted to the right, the first engagement means 112 - the protruding tabs 112a, 112b, 112c, 112d of the disc 111, enters the locking grooves 122a, 122b, 122c, 122d of the ring 120, wherein the shelf 200 is locked to the pivoting disc 111. At this position, the actuation arm 113 is locked by placing said arm 113 behind the stop 205. Now the shelf 200 is secured and pivotable around its central axis in the cabinet 400, without risk of loosening from the first attachment means 110.

Fig. 10a-c shows the assembly of the upper shelf 200 to the cabinet 400, where the first attachment means 110 of the connector 100 is positioned on the supporting arm 310, which in turn is attached to the guide rail 300 (not visible) via the sleeve 311 (not visible). Exactly as explained above, the shelf 200 is inserted into the cabinet 400, positioned on the first attachment means 110, pivoted to the right, locked by the actuation arm 113 and then the actuation arm 113 is locked behind the stop 205. Several shelves 200 may be mounted in the same way on the same guide rail 300 if wanted. To make the insertion of the shelf 200 into the cabinet 400 more easy, the supporting arm 310 is preferred to be positioned in a lowermost position, just above the lower shelf 200. When the upper shelf 200 is mounted in the cabinet, it is very easy to adjust the height of the shelf 200 in the cabinet 400 by means of the sleeve 311 as explained in connection to Fig. 8a-b. This enables a very quick and easy mounting of the shelf 200 in the cabinet 400 and in a wanted vertical position in the cabinet 400.

## Claims

1. A storage carousel (1) for a cabinet (400), the storage carousel (1) comprising:
at least one shelf (200),
at least one connecting means (100) for pivotable connection of the shelf (200) to a cabinet (400), wherein the connecting means (100) comprising first attachment means (110) arranged for attachment either to the shelf (200) or a cabinet (400), and second attachment means (120) arranged for attachment to the one of the shelf (200) or a cabinet (400) to which the first attachment means (110) is not connected, wherein the second attachment means (120) has the form of a circular ring (120), and further a pivotable part (111) arranged at the first attachment means (110), and which pivotable part (111) is pivotable relative the first attachment means (110), and the pivotable part (111) comprises first engagement means (112), and the second attachments means (120) comprises corresponding second engagement means (122), wherein the pivotable part (111) is lockable relative to the second attachments means (120) by engaging the first engagement means (112) with the second engagement means (122), wherein the shelf (200) in its locked position relative the pivotable part (111), is pivotable, wherein the pivotable part (111) is a circular disc and the first engagement means (112) are at least one radially protruding tab (112a, 112b, 112c, 112d) arranged on a periphery of the disc (111), and the outer dimensions of the disc fits inside the circular ring (120), wherein the second attachment means (120) further comprises at least one recess (123a, 123b, 123c, 123d) arranged to receive the at least one radially protruding tab (112a, 112b, 112c, 112d) of the disc (111), and the second engagement means (122) is at least one locking groove (122a, 122b, 122c, 122d) arranged in connection to the at least one recess (123a, 123b, 123c, 123d), wherein each locking groove (122a, 122b, 122c, 122d) has an opening towards the adjacent recess (123a, 123b, 123c, 123d) such as the protruding tab (112a, 112b, 112c, 112d) first may be inserted into the recess (123a, 123b, 123c, 123d) and then, by pivoting the pivotable part (111), the protruding tab (112a, 112b, 112c, 112d) enters the locking groove (122a, 122b, 122c, 122d) for engaging the first and the second engaging means (112, 122).

2. Storage carousel (1) according to claim 1, wherein the pivotable part (111) comprises an actuation arm (113) fixedly arranged to the pivotable part (111), wherein the actuation arm (113) is arranged for actuating the locking/unlocking of the pivotable part (111) relative to the second attachments means (120) by pivoting the actuation arm (113), and thereby the pivotable part (111) engages/disengages the first engagement means (112) with the second engagement means (122).

3. Storage carousel (1) according to claim 2, wherein the actuation arm (113) protrudes radially from the pivotable part (111).

4. Storage carousel (1) according to any of claims 2 - 3, wherein the actuation arm (113) is lockable by a stop (205), when the pivotable part (111) of the first attachment means (110) is locked relative to the second attachments means (120), which stop (205) is arranged on an underside (201) of the shelf (200).

5. Storage carousel (1) according to any of the preceding claims wherein the storage carousel (1) further comprising a guide rail (300) which is arranged to be fixedly attached to an inside of a sidewall of a cabinet, outside the periphery of the shelf (200), and the storage carousel (1) further comprising a supporting arm (310), and at least one first attachment means (110) is arranged at a first end (310a) of the supporting arm (310), and a second end (310b) of the supporting arm (310) comprises a sleeve (311) which is slidably arranged at the guide rail (300) such as the sleeve (311) can be displaced along the guide rail (300), wherein the shelf (200) is vertically displaceable in the cabinet (400).

6. Storage carousel (1) according to claim 5, wherein the sleeve (311) is lockable to the guide rail (300) by a friction lock (312).

## Patentansprüche

1. Lagerkarussell (1) für einen Schrank (400), wobei das Lagerkarussell (1) umfasst:
mindestens einen Regalboden (200),
mindestens ein Verbindungsmittel (100) zur schwenkbaren Verbindung des Regalbodens (200) mit einem Schrank (400), wobei das Verbindungsmittel (100) ein erstes Befestigungsmittel (110) umfasst, das zur Befestigung entweder an dem Regalboden (200) oder einem Schrank (400) angeordnet ist, und ein zweites Befestigungsmittel (120), das zur Befestigung an dem Regalboden (200) oder einem Schrank (400) angeordnet ist, mit dem das erste Befestigungsmittel (110) nicht verbunden ist, wobei das zweite Befestigungsmittel (120) die Form eines kreisförmigen Rings (120) aufweist, und ferner ein schwenkbares Teil (111), das an dem ersten Befestigungsmittel (110) angeordnet ist, und wobei das schwenkbare Teil (111) relativ zu dem ersten Befestigungsmittel (110) schwenkbar ist, und das schwenkbare Teil (111) ein erstes Eingriffsmittel (112) umfasst, und das zweite Befestigungsmittel (120) ein entsprechendes zweites Eingriffsmittel (122) umfasst, wobei das schwenkbare Teil (111) relativ zu dem zweiten Befestigungsmittel (120) verriegelbar ist, indem das erste Eingriffsmittel (112) mit dem zweiten Eingriffsmittel (122) in Eingriff gebracht wird, wobei der Regalboden (200) in seiner verriegelten Position relativ zu dem schwenkbaren Teil (111) schwenkbar ist, wobei das schwenkbare Teil (111) eine kreisförmige Scheibe ist und das erste Eingriffsmittel (112) mindestens eine radial vorstehende Lasche (112a, 112b, 112c, 112d) ist, die an einem Umfang der Scheibe (111) angeordnet ist, und die Außenabmessungen der Scheibe in den kreisförmigen Ring (120) passen, wobei das zweite Befestigungsmittel (120) ferner mindestens eine Aussparung (123a, 123b, 123c, 123d) umfasst, die dazu angeordnet ist, die mindestens eine radial vorstehende Lasche (112a, 112b, 112c, 112d) der Scheibe (111) aufzunehmen, und das zweite Eingriffsmittel (122) mindestens eine Verriegelungsnut (122a, 122b, 122c, 122d) ist, die in Verbindung mit der mindestens einen Aussparung (123a, 123b, 123c, 123d) angeordnet ist, wobei jede Verriegelungsnut (122a, 122b, 122c, 122d) eine Öffnung in Richtung der benachbarten Aussparung (123a, 123b, 123c, 123d) aufweist, sodass die vorstehende Lasche (112a, 112b, 112c, 112d) zunächst in die Aussparung (123a, 123b, 123c, 123d) eingeführt werden kann und dann durch Schwenken des schwenkbaren Teils (111) die vorstehende Lasche (112a, 112b, 112c, 112d) in die Verriegelungsnut (122a, 122b, 122c, 122d) eintritt, um mit dem ersten und dem zweiten Eingriffsmittel (112, 122) in Eingriff zu kommen.

2. Lagerkarussell (1) gemäß Anspruch 1, wobei das schwenkbare Teil (111) einen Betätigungsarm (113) umfasst, der fest an dem schwenkbaren Teil (111) angeordnet ist, wobei der Betätigungsarm (113) dazu angeordnet ist, das Verriegeln/Entriegeln des schwenkbaren Teils (111) relativ zu dem zweiten Befestigungsmittel (120) durch Schwenken des Betätigungsarms (113) zu betätigen, und dadurch das schwenkbare Teil (111) das erste Eingriffsmittel (112) mit dem zweiten Eingriffsmittel (122) in Eingriff bringt bzw. diese voneinander trennt.

3. Lagerkarussell (1) gemäß Anspruch 2, wobei der Betätigungsarm (113) radial aus dem schwenkbaren Teil (111) herausragt.

4. Lagerkarussell (1) gemäß einem der Ansprüche 2 - 3, wobei der Betätigungsarm (113) durch einen Anschlag (205) verriegelbar ist, wenn das schwenkbare Teil (111) des ersten Befestigungsmittels (110) relativ zu dem zweiten Befestigungsmittel (120) verriegelt ist, wobei der Anschlag (205) an einer Unterseite (201) des Regalbodens (200) angeordnet ist.

5. Lagerkarussell (1) gemäß einem der vorhergehenden Ansprüche, wobei das Lagerkarussell (1) ferner eine Führungsschiene (300) umfasst, die dazu angeordnet ist, fest an einer Innenseite einer Seitenwand eines Schranks außerhalb des Umfangs des Regalbodens (200) angebracht zu werden, und das Lagerkarussell (1) ferner einen Tragarm (310) umfasst und mindestens ein erstes Befestigungsmittel (110) an einem ersten Ende (310a) des Tragarms (310) angeordnet ist und ein zweites Ende (310b) des Tragarms (310) eine Hülse (311) umfasst, die verschiebbar so an der Führungsschiene (300) angeordnet ist, dass die Hülse (311) entlang der Führungsschiene (300) verschoben werden kann, wobei der Regalboden (200) in dem Schrank (400) vertikal verschiebbar ist.

6. Lagerkarussell (1) gemäß Anspruch 5, wobei die Hülse (311) durch einen Reibschluss (312) mit der Führungsschiene (300) verriegelbar ist.

## Revendications

1. Carrousel de stockage (1) pour placard (400), le carrousel de stockage (1) comprenant :
au moins un étagère (200),
au moins un moyen de liaison (100) pour la liaison pivotante de l'étagère (200) à un placard (400), le moyen de liaison (100) comprenant un premier moyen de fixation (110) conçu pour une fixation soit à l'étagère (200) soit à un placard (400), et un second moyen de fixation (120) conçu pour être fixé à celui de l'étagère (200) ou du placard (400) auquel le premier moyen de fixation (110) n'est pas relié, le second moyen de fixation (120) ayant la forme d'un anneau circulaire (120), et en outre une partie pivotante (111) disposée au niveau du premier moyen de fixation (110), et laquelle partie pivotante (111) pouvant pivoter par rapport au premier moyen de fixation (110), et la partie pivotante (111) comprenant un premier moyen de mise en prise (112), et le second moyen de fixation (120) comprenant un second moyen de mise en prise (122) correspondant, la partie pivotante (111) pouvant être verrouillée par rapport au second moyen de fixation (120) en mettant en prise le premier moyen de mise en prise (112) avec le second moyen de mise en prise (122), l'étagère (200) dans sa position verrouillée par rapport à la partie pivotante (111), pouvant pivoter, la partie pivotante (111) étant un disque circulaire et le premier moyen de mise en prise (112) étant au moins une languette faisant saillie radialement (112a, 112b, 112c, 112d) disposée sur une périphérie du disque (111), et les dimensions extérieures du disque s'adaptant à l'intérieur de l'anneau circulaire (120), le second moyen de fixation (120) comprenant en outre au moins un évidement (123a, 123b, 123c, 123d) conçu pour recevoir l'au moins une languette faisant saillie radialement (112a, 112b, 112c, 112d) du disque (111), et le second moyen de mise en prise (122) étant au moins une rainure de verrouillage (122a, 122b, 122c, 122d) conçue en liaison avec l'au moins un évidement (123a, 123b, 123c, 123d), chaque rainure de verrouillage (122a, 122b, 122c, 122d) ayant une ouverture vers l'évidement (123a, 123b, 123c, 123d) adjacent de sorte que la languette faisant saillie (112a, 112b, 112c, 112d) puisse d'abord être insérée dans l'évidement (123a, 123b, 123c, 123d) et ensuite, en faisant pivoter la partie pivotante (111), la languette faisant saillie (112a, 112b, 112c, 112d) pénétrant dans la rainure de verrouillage (122a, 122b, 122c, 122d) pour mettre en prise les premier et second moyens de mise en prise (112, 122).

2. Carrousel de stockage (1) selon la revendication 1, la partie pivotante (111) comprenant un bras d'actionnement (113) situé à demeure sur la partie pivotante (111), le bras d'actionnement (113) étant conçu pour actionner le verrouillage/déverrouillage de la partie pivotante (111) par rapport au second moyen de fixation (120) en faisant pivoter le bras d'actionnement (113), et ainsi la partie pivotante (111) mettant en prise/hors prise le premier moyen de mise en prise (112) avec le second moyen de mise en prise (122).

3. Carrousel de stockage (1) selon la revendication 2, le bras d'actionnement (113) faisant saillie radialement de la partie pivotante (111).

4. Carrousel de stockage (1) selon l'une quelconque des revendications 2-3, le bras d'actionnement (113) pouvant être verrouillé par une butée (205), lorsque la partie pivotante (111) du premier moyen de fixation (110) est verrouillée par rapport au second moyen de fixation (120), laquelle butée (205) étant disposée sur une face inférieure (201) de l'étagère (200).

5. Carrousel de stockage (1) selon l'une quelconque des revendications précédentes, le carrousel de stockage (1) comprenant en outre un rail de guidage (300) qui est conçu pour être fixé à demeure à un intérieur d'une paroi latérale d'un placard, à l'extérieur de la périphérie de l'étagère (200), et le carrousel de stockage (1) comprenant en outre un bras de support (310), et au moins un premier moyen de fixation (110) étant situé au niveau d'une première extrémité (310a) du bras de support (310), et une seconde extrémité (310b) du bras de support (310) comprenant un manchon (311) qui est conçu de manière coulissante au niveau du rail de guidage (300) de sorte que le manchon (311) puisse être déplacé le long du rail de guidage (300), l'étagère (200) pouvant être déplacée verticalement dans le placard (400).

6. Carrousel de stockage (1) selon la revendication 5, le manchon (311) pouvant être verrouillé sur le rail de guidage (300) par un verrou à friction (312).
